# EUROPEAN PATENT SPECIFICATION

(11) **EP 3 594 510 B1**
(45) Date of publication and mention of the grant of the patent: **24.08.2022**
(21) Application number: 19764409.9
(22) Date of filing: 01.03.2019
(51) Int. Cl.: F15B 11/08, F15B 11/00, F16K 27/04, F15B 13/042, F15B 13/08, F15B 13/04, F15B 11/16

(54) **CONTROL VALVE**
REGELVENTIL
VANNE DE COMMANDE

(30) Priority: 09.03.2018 JP 2018043140
(43) Date of publication of application: 15.01.2020
(73) Proprietor: KYB Corporation, Tokyo 105-6111 (JP)
(72) Inventor: KITANI, Toshiyuki, Tokyo 105-6111 (JP); YOSHIDA, Nobuyoshi, Tokyo 105-6111 (JP)
(74) Representative: Grünecker Patent- und Rechtsanwälte PartG mbB
(86) International application number: PCT/JP2019/008148
(87) International publication number: WO 2019/172130

(56) References cited:
- JP-A- H07 238 575
- JP-A- 2008 175 281
- JP-A- 2014 095 399
- US-A1- 2015 337 969

## Description

### TECHNICAL FIELD

The present invention relates to a control valve.

### BACKGROUND ART

A control valve is already known from JP 2008 175 281 A. A control valve including a plurality of spools assembled into a valve housing, a single cap attached to one side surface of the valve housing, a plurality of pilot chambers provided in the cap and corresponding to each of the spools, a selection valve configured to select a maximum pressure in pressures of the plurality of pilot chambers, and a maximum pressure introduction passage into which the maximum pressure selected by the selection valve is introduced is known (see JP2014-95399A).

### SUMMARY OF INVENTION

However, the control valve described in JP2014-95399A has a structure in which the single cap is provided on the one side surface of the valve housing. Thus, if a size of the control valve is increased, the size of the cap is also increased therewith and a weight of the cap becomes larger. This leads to a problem that an attaching work of the cap to the valve housing becomes difficult.

The present invention has an object to improve attaching workability of the cap to the valve housing.

The above and other objects of the invention are achieved by the control valve according to claim 1. Preferred embodiments are claimed in the dependent claims.

### BRIEF DESCRIPTION OF DRAWINGS

FIG. 1 is a longitudinal sectional view of a cap attached to a valve housing of a control valve according to this embodiment;
FIG. 2 is a cross sectional view of the cap along a II-II line in Fig. 1; and
FIG. 3 is a cross sectional view of the cap attached to the valve housing of the control valve according to a variation of this embodiment.

### DESCRIPTION OF EMBODIMENTS

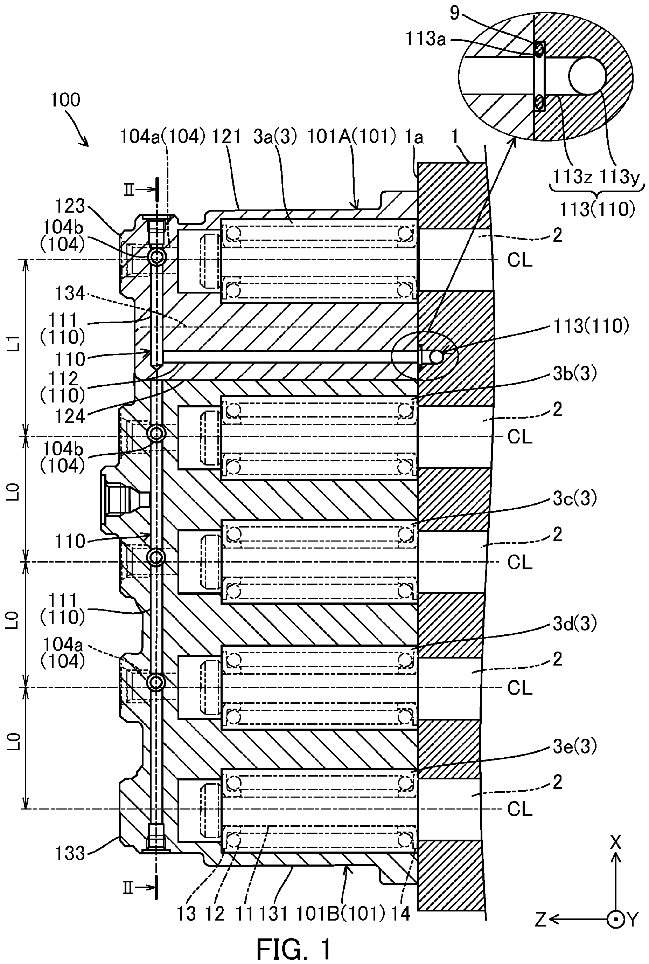

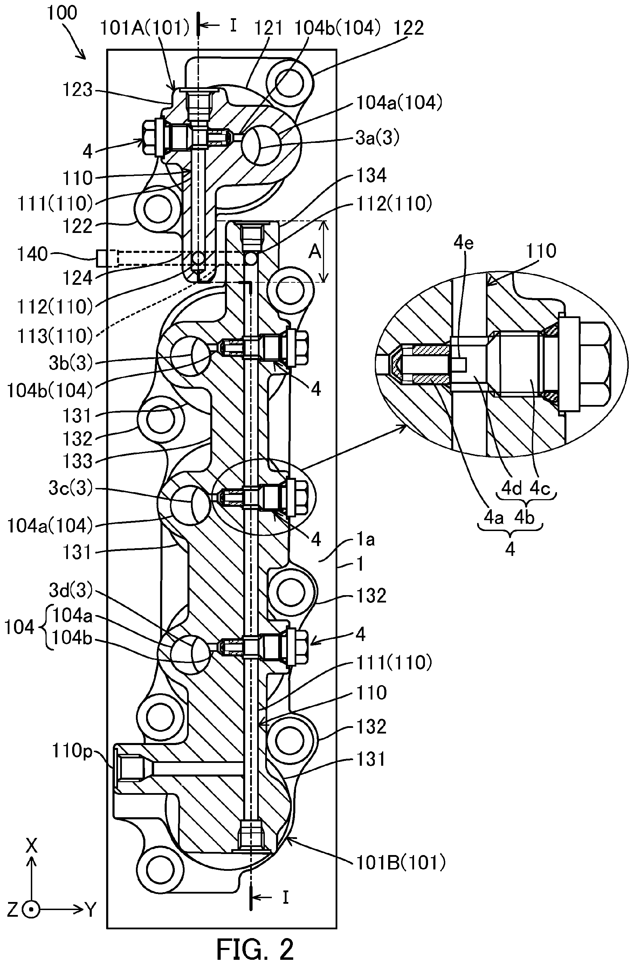

A control valve according to an embodiment of the present invention will be described by referring to Figs. 1 and 2. Fig. 1 is a longitudinal sectional view of a cap 101 attached to a valve housing 1, and Fig. 2 is a cross sectional view of the cap along a II-II line in Fig. 1. In Fig. 1, a section along the I-I line in Fig. 2 is shown.

A control valve 100 is for switching supply and discharge of a working fluid to and from an actuator and for controlling an operation of the actuator. An example in which a working oil is used as the working fluid will be described, but other fluids such as working water may be used as the working fluid.

The control valve 100 includes a rectangular valve housing 1, a plurality of spools 2 slidably assembled into the valve housing 1, a plurality of pilot chambers 3 corresponding to the plurality of spools 2, a plurality of caps 101 on each of which a pilot chamber 3 is provided, a maximum pressure introduction passage 110 into which a maximum pressure selected by a plurality of selection valves 4 in pressures of the plurality of pilot chambers 3 is introduced, and a communication path 104 provided in the cap 101 and allowing the pilot chamber 3 and the maximum pressure introduction passage 110 to communicate with each other.

In the following description, a direction which is an axial direction of the spool 2, that is, a center axis CL direction of the spool 2 and in which the spool 2 is moved is also noted as a Z-direction. Moreover, the plurality of spools 2 and the plurality of pilot chambers 3 are aligned in a direction orthogonal to the axial direction of the spool 2. Thus, an arrangement direction of the spools 2 which is one direction orthogonal to the axial direction (Z-direction) of the spool 2, that is, the arrangement direction of the pilot chambers 3 is also noted as an X-direction. Furthermore, a width direction of the cap 101, that is, a direction orthogonal to each of the axial direction (Z-direction) of the spool 2 and the arrangement direction (X-direction) of the spool 2 is also noted as a Y-direction.

A first cap 101A and a second cap 101B as the plurality of caps 101 are attached to one side surface 1a of the valve housing 1. One pilot chamber 3 (3a) is provided in the first cap 101A, and four pilot chambers 3 (3b, 3c, 3d, and 3e) are provided in the second cap 101B. An interval L1 between the pilot chamber 3 (3a) provided in the first cap 101A and the pilot chamber 3 (3b) provided in the second cap 101B adjacent to the pilot chamber 3 (3a) is larger than an interval L0 between each of the plurality of pilot chambers 3 (3b, 3c, 3d, and 3e) provided in the second cap 101B.

The first cap 101A has a single cylindrical cylinder portion 121 provided coaxially with the spool 2, a plurality of bolting portions 122 protruding outward in a radial direction from the cylinder portion 121, a first protruding end portion 123 protruding to a side opposite to the valve housing 1 along the axial direction (Z-direction) of the spool 2 from the cylinder portion 121, and a first protruding portion 124 protruding to the second cap 101B side along the arrangement direction (X-direction) of the pilot chamber 3 from the cylinder portion 121. The bolt is inserted through the bolting portion 122, and by screwing the bolt into a screw portion of the valve housing 1, the first cap 101A is fixed to the one side surface 1a of the valve housing 1.

The second cap 101B has a plurality of cylindrical cylinder portions 131 provided coaxially with the spool 2, a plurality of bolting portions 132 protruding outward in the radial direction from each of the cylinder portions 131, a second protruding end portion 133 protruding to the side opposite to the valve housing 1 along the axial direction (Z-direction) of the spool 2 from each of the cylinder portions 131, and a second protruding portion 134 protruding to the first cap 101A side along the arrangement direction (X-direction) of the pilot chamber 3 from the cylinder portion 131 which is the closest to the first cap 101A in the plurality of cylinder portions 131. The bolt is inserted through the bolting portion 132, and by screwing the bolt into a screw portion of the valve housing 1, the second cap 101B is fixed to the one side surface 1a of the valve housing 1.

When the first cap 101A and the second cap 101B are attached to the valve housing 1, the pilot chamber 3 with which one end of the spool 2 is faced is defined. In the pilot chamber 3, a centering spring 12 as a biasing member for applying a spring force to the one end of the spool 2 is accommodated. A rod (spool end) 11 extending into the pilot chamber 3 is connected to the one end of the spool 2. In the pilot chamber 3, a pair of spring receiving members 13 and 14 slidable along an outer periphery of the rod 11 are accommodated, and the centering spring 12 is interposed between the pair of spring receiving members 13 and 14.

A pilot pressure introduction port 104a for leading a pilot pressure into the pilot chamber 3 is provided in the first protruding end portion 123. The second protruding end portion 133 is provided so as to connect the plurality of cylinder portions 131. A pilot pressure introduction port 104a for introducing the pilot pressure into each of the pilot chambers 3 is provided in the second protruding end portion 133.

The pilot pressure introduction port 104a of the first cap 101A is provided so as to extend in the axial direction (Z-direction) of the spool 2, and one end is opened in an end surface of the first cap 101A, while the other end is connected to the pilot chamber 3. Similarly, the pilot pressure introduction port 104a of the second cap 101B is provided so as to extend in the axial direction (Z-direction) of the spool 2, and one end is opened in the end surface of the second cap 101B, while the other end is connected to the pilot chamber 3.

A y-direction passage 104b connected to the maximum pressure introduction passage 110 is connected to the pilot pressure introduction port 104a connected to the pilot chamber 3a of the first cap 101A. That is, the pilot pressure introduction port 104a provided in the first cap 101A and the y-direction passage 104b constitute the communication path 104 allowing the pilot chamber 3a and the maximum pressure introduction passage 110 to communicate with each other. Similarly, the y-direction passage 104b connected to the maximum pressure introduction passage 110 is connected to the pilot pressure introduction port 104a connected to the pilot chambers 3b, 3c, and 3d of the second cap 101B. That is, the pilot pressure introduction port 104a provided in the second cap 101B and the y-direction passage 104b constitute the communication path 104 allowing the pilot chambers 3b, 3c, and 3d and the maximum pressure introduction passage 110 to communicate with each other.

A selection valve 4 configured to select the maximum pressure in the pressures of the plurality of pilot chambers 3 is assembled in each of the communication paths 104. In this embodiment, the selection valve 4 is provided in the y-direction path 104b extending in the width direction (Y-direction) of the cap 101. A pressure of the pilot chamber 3 acts on one of the selection valve 4, and the pressure of the maximum pressure introduction passage 110 acts on the other.

The selection valve 4 has a plug 4b and a poppet 4a opened/closed in the Y-direction. The plug 4b has a fixed portion 4c fixed to the cap 101 and a regulating portion 4d protruding from the fixed portion 4c and regulating a movement amount of the poppet 4a in an open direction. A groove 4e communicating with an internal passage of the poppet 4a is provided on an outer periphery of the regulating portion 4d. The number of the grooves 4e to be provided may be only one or may be in plural along a peripheral direction.

If the pressure of the maximum pressure introduction passage 110 is higher than the pressure of the pilot chamber 3 communicating with the communication path 104 in which the selection valve 4 is provided, the poppet 4a is seated on a seat portion provided on the communication path 104 and is brought into a valve-closed state. When the selection valve 4 is brought into the valve-closed state, the communication between the pilot chamber 3 and the maximum pressure introduction passage 110 through the communication path 104 is shut off.

When the pressure of the pilot chamber 3 communicating with the communication path 104 in which the selection valve 4 is provided becomes higher than the maximum pressure introduction passage 110, the poppet 4a leaves the seat portion provided on the communication path 104, moves until abutting on the regulating portion 4d and is brought into a valve-open state. When the selection valve 4 is brought into the valve-open state, the pilot chamber 3 and the maximum pressure introduction passage 110 communicate with each other through the communication path 104.

As a result, the working oil introduced from the pilot chamber 3 to the communication path 104 is introduced into the internal passage of the poppet 4a through a space between the outer periphery of the poppet 4a and an inner periphery of the y-direction passage 104b and is introduced to the maximum pressure introduction passage 110 through the groove 4e of the regulating portion 4d from an opening on the regulating portion 4d side in the internal passage of the poppet 4a.

As described above, the selection valve 4 is opened when the pressure of the pilot chamber 3 communicating with the communication path 104 in which the selection valve 4 is provided is higher than the pressure of the maximum pressure introduction passage 110, and the selection valve 4 introduces the pressure of the pilot chamber 3 communicating with the communication path 104 to the maximum pressure introduction passage 110.

Therefore, the maximum pilot pressure in the plurality of pilot chambers 3 is selected by the selection valve 4 and is introduced to the maximum pressure introduction passage 110. An output port 110p for extracting the pressure in the maximum pressure introduction passage 110 is provided in the second cap 101B. The maximum pressure introducing to the maximum pressure introduction passage 110 is introduced to another hydraulic device via a passage (not shown) connected to the output port 110p and is used for controlling the hydraulic device.

The maximum pressure introduction passage 110 has a first passage 111 and a second passage 112 provided in the first cap 101A and the second cap 101B, respectively, and a third passage 113 provided in the valve housing 1 in order to allow the second passages 112 of the first cap 101A and the second cap 101B to communicate with each other.

The first passage 111 of the first cap 101A is connected to the communication path 104. The first passage 111 of the first cap 101A is provided so as to extend linearly along the arrangement direction (X-direction) of the pilot chamber 3 orthogonal to the axial direction (Z-direction) of the spool 2 on the first protruding end portion 123. Similarly, the first passage 111 of the second cap 101B is connected to the communication path 104. The first passage 111 of the second cap 101B is provided so as to extend linearly along the X-direction on the second protruding end portion 133. The first passage 111 of the second cap 101B is provided so as to penetrate from the second protruding portion 134 across to the end portion on the opposite side. As described above, the first passage 111 is provided in the first protruding end portion 123 of the first cap 101A and on the second protruding end portion 133 of the second cap 101B. That is, the first passage 111 is provided in the side opposite from the valve housing 1 across the pilot chamber 3.

The second passage 112 is provided so as to extend from the first passage 111 toward the valve housing 1. The second passage 112 of the first cap 101A is provided on the first protruding portion 124, and the second passage 112 of the second cap 101B is provided on the second protruding portion 134.

The second passage 112 of the first cap 101A is provided so as to extend linearly along the axial direction (Z-direction) of the spool 2. The second passage 112 of the first cap 101A has one end connected to the first passage 111 and the other end opened in the one side surface 1a side of the valve housing 1 to which the first cap 101A is attached. The second passage 112 of the second cap 101B is provided so as to extend linearly along the axial direction (Z-direction) of the spool 2. The second passage 112 of the second cap 101B has one end connected to the first passage 111 and the other end opened in the one side surface 1a side of the valve housing 1 to which the second cap 101B is attached.

The first protruding portion 124 of the first cap 101A and the second protruding portion 134 of the second cap 101B are disposed so as to face each other when seen from the Y-direction. The third passage 113 provided in the valve housing 1 is connected to the second passage 112 of the first cap 101A and the second passage 112 of the second cap 101B in a region A where the first protruding portion 124 and the second protruding portion 134 are faced with each other.

As described above, the second passage 112 of the first cap 101A and the second passage 112 of the second cap 101B communicate with each other by the third passage 113 in the valve housing 1 in the region A in which the first protruding portion 124 of the first cap 101A and the second protruding portion 134 of the second cap 101B are faced with each other. Thus, the size of the pilot chambers 3 in the arrangement direction (X-direction) of the valve housing 1 can be reduced as compared with the disposition of the first protruding portion 124 and the second protruding portion 134 on the same straight line in parallel with the X-direction.

Moreover, in this embodiment, as described above, the interval L1 between the pilot chamber 3a of the first cap 101A and the pilot chamber 3b of the second cap 101B adjacent to each other is larger than the interval L0 between the plurality of pilot chambers 3b, 3c, 3d, and 3e provided in the second cap 101B. In other words, the cap is divided into the first cap 101A and the second cap 101B at a position where the distance between the adjacent pilot chambers 3, that is, the distance between the adjacent spools 2 is relatively large.

The second passage 112 can be provided easily without interference with the pilot chamber 3 by providing the second passage 112 on a portion where the interval between the pilot chambers 3 adjacent to each other is large.

The third passage 113 has a y-direction passage 113y provided so as to extend linearly along the Y-direction orthogonal to each of the first passage 111 and the second passage 112 and a pair of z-direction passages 113z provided so as to extend linearly along the Z-direction from the y-direction passage 113y toward the one side surface 1a side of the valve housing 1.

The y-direction passage 113y is provided linearly from one end surface of the valve housing 1 in the Y-direction. An opening of the y-direction passage 113y provided in the one end surface of the valve housing 1 in the Y-direction is closed by a plug 140. Each of the pair of z-direction passages 113z has one end opened in the one side surface 1a of the valve housing 1. On one opening portion 113a of the z-direction passages 113z, an O-ring 9 as a seal member for sealing a space between the valve housing 1 and the first cap 101A is provided. Similarly, on an opening portion 113a of the other z-direction passages 113z, the O-ring 9 as a seal member for sealing a space between the valve housing 1 and the second cap 101B is provided.

Since the second passages 112 of the first cap 101A and the second cap 101B can be made to communicate with each other through the third passage 113 provided in the valve housing 1, there is no need to provide an exclusive pipeline for connecting the second passages 112 of the first cap 101A and the second cap 101B to each other. That is, according to this embodiment, the constitution of the control valve 100 can be simplified.

According to the aforementioned embodiment, the following working effects are exerted.

(1) By providing the plurality of caps 101 attached to the one side surface 1a of the valve housing 1, the weight of each of the caps 101 can be reduced as compared with the case of providing a single cap. As a result, handling of the cap 101 is made easy, and the attaching workability of the cap 101 to the valve housing 1 can be improved.
(2) The maximum pressure of each of the pilot chambers 3 can be selected by the selection valve 4 provided in the cap 101. By providing the selection valve 4 in the cap 101, the number of external pipelines can be reduced and thus, the structure around the control valve 100 can be simplified.
(3) The first passage 111, the second passage 112, and the third passage 113 constituting the maximum pressure introduction passage 110 are provided linearly, and the shape of the maximum pressure introduction passage 110 can be simplified. As a result, the first passage 111 and the second passage 112 provided in the cap 101 and the third passage 113 provided in the valve housing 1, for example, can be provided easily by drilling. Therefore, the manufacture costs of the control valve 100 can be reduced.
(4) The first passage 111 constituting a part of the maximum pressure introduction passage 110 is provided in the side opposite from the valve housing 1 across the pilot chamber 3. Thus, the size of the control valve 100 in the X-direction can be reduced as compared with the case in which the passage constituting the maximum pressure introduction passage is provided in each of spaces between the adjacent pilot chambers.

The following variations are also within the range of the present invention, and the constitutions illustrated in the variations and the constitution described in the aforementioned embodiment can be combined or the constitutions described in the following different variations can be also combined.

### (Variation 1)

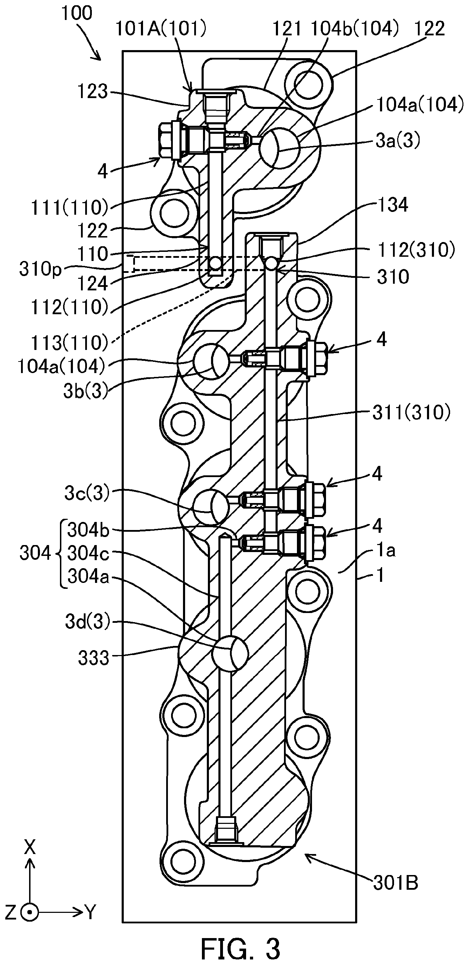

The constitution of the maximum pressure introduction passage 110 and the disposition of the selection valve 4 are not limited to the aforementioned embodiment. For example, in the aforementioned embodiment, the first passage 111 constituting the part of the maximum pressure introduction passage 110 is provided in the second protruding end portion 133 of the second cap 101B so as to penetrate from the second protruding portion 134 across to the end portion on the opposite side (see Fig. 2). On the other hand, in this variation, as illustrated in Fig. 3, a first passage 311 constituting a part of the maximum pressure introduction passage 310 extends in the second protruding end portion 333 of the second cap 301B from the second protruding portion 134 to the center part of the second cap 301B in the X-direction.

In this variation, a communication path 304 allowing the pilot chamber 3d and a maximum pressure introduction passage 310 to communicate with each other has a pilot pressure introduction port 304a connected to the pilot chamber 3d, a y-direction passage 304b connected to the first passage 311 of the maximum pressure introduction passage 310, and an x-direction passage 304c connected to the pilot pressure introduction port 304a and the y-direction passage 304b, respectively. The x-direction passage 304c is provided in parallel with the first passage 311. The selection valve 4 for selecting the higher of the pressure of the communication path 304 communicating with the pilot chamber 3d and the pressure of the maximum pressure introduction passage 310 is provided in the y-direction passage 304b extending in the Y-direction. According to this variation, since the maximum pressure introduction passage 310 of the second cap 101B can be made shorter, machining is made easy.

### (Variation 2)

In the aforementioned embodiment, the example in which the output port 110p of the maximum pressure introduction passage 110 is provided in the second cap 101B is described, but the present invention is not limited to this. For example, as illustrated in Fig. 3, an output port 310p of the maximum pressure introduction passage 310 may be provided in the valve housing 1 instead of the output port 110p (see Fig. 2) provided in the second cap 101B. In this variation, the plug 140 described in the aforementioned embodiment can be omitted, and the pressure of the maximum pressure introduction passage 310 can be taken out of the third passage 113.

### (Variation 3)

In the aforementioned embodiment, the example in which there is the one pilot chamber 3 provided in the first cap 101A, and there are the four chambers 3 provided in the second cap 101B is described, but the present invention is not limited to this. For example, the number of the pilot chambers 3 provided in the first cap 101A may be plural. Moreover, the number of pilot chambers 3 provided in the second cap 101B may be one to three or five or more.

### (Variation 4)

In the aforementioned embodiment, the example in which the two caps 101 are provided is described, but three or more of the caps 101 may be attached to the one side surface 1a of the valve housing 1.

The constitutions, actions, and effects of the embodiment of the present invention constituted as above will be collectively described.

The control valve 100 includes the valve housing 1, the plurality of spools 2 assembled into the valve housing 1, the plurality of pilot chambers 3 corresponding to the plurality of spools 2, the plurality of caps 101 in which the pilot chambers 3 are provided and attached to the one side surface 1a of the valve housing 1, the maximum pressure introduction passages 110 and 310 to which the maximum pressure selected by the selection valve 4 in the pressures of the plurality of pilot chambers 3 is introduced, and the communication paths 104 and 304 provided in the cap 101 and allowing the pilot chamber 3 and the maximum pressure introduction passages 110 and 310 to communicate with each other. The maximum pressure introduction passages 110 and 310 have the first passages 111 and 311 provided on the side opposite from the valve housing 1 across the pilot chamber 3 in the cap 101 and connected to the communication paths 104 and 304, the second passage 112 extending toward the valve housing 1 from the first passages 111 and 311 in the cap 101 and opened in the one side surface 1a side of the valve housing 1, and the third passage 113 provided so as to allow the second passages 112 of the plurality of caps 101 to communicate with each other in the valve housing 1.

In this constitution, by providing the caps 101 attached to the one side surface 1a of the valve housing 1 in plural, the weight reduction of each of the caps 101 can be realized. As a result, the attaching workability of the cap 101 on the valve housing 1 can be improved.

The control valve 100 further includes the selection valve 4 provided in the communication paths 104 and 304. The selection valve 4 is opened when the pressure of the pilot chamber 3 communicating with the communication paths 104 and 304 is higher than the pressure of the maximum pressure introduction passages 110 and 310 and introduces the pressure of the pilot chamber 3 communicating with the communication paths 104 and 304 to the maximum pressure introduction passages 110 and 310.

In this constitution, the maximum pressure in each of the pilot chambers 3 can be selected by the selection valve 4 provided in the cap 101.

In the control valve 100, the plurality of caps 101 has the first cap 101A and the second caps 101B and 301B. The first cap 101A has the first protruding portions 124 protruding to the second caps 101B and 301B side, and the second caps 101B and have the second protruding portion 134 protruding to the first cap 101A side. The second passage 112 is provided in the first protruding portion 124 and the second protruding portion 134, respectively, and the first protruding portion 124 and the second protruding portion 134 are disposed so as to be faced with each other. The third passage 113 is connected to the second passage 112 of the first cap 101A and the second passages 112 of the second caps 101B and 301B in the region A in which the first protruding portion 124 and the second protruding portion 134 are faced with each other.

In this constitution, since the second passage 112 of the first cap 101A and the second passages 112 of the second caps 101B and 301B communicate with each other by the third passage 113 in the valve housing 1 in the region A in which the first protruding portion 124 of the first cap 101A and the second protruding portions 134 of the second caps 101B and 301B are faced with each other, the size of the valve housing 1 can be reduced.

In the control valve 100, the plurality of pilot chambers 3 is provided in the second caps 101B and 301B, and the interval L1 between the pilot chamber 3 provided in the first cap 101A and the pilot chamber 3 provided in the second caps 101B and 301B adjacent to the pilot chamber 3 of the first cap 101A is larger than the interval L0 between the plurality of pilot chambers 3 provided in the second caps 101B and 301B.

In this constitution, the second passage 112 can be provided easily without interfering with the pilot chamber 3 by providing the second passage 112 in a portion having the wide interval between the pilot chambers 3 adjacent to each other.

The control valve 100 has passages such as the first passages 111 and 311 extending linearly along the direction orthogonal to the axial direction of the spool 2, the second passage 112 extending linearly along the axial direction of the spool 2, and the third passage 113 extending linearly along the direction orthogonal to each of the first passages 111 and 311 and the second passage 112.

In this constitution, since the maximum pressure introduction passage can be provided by providing the first passages 111 and 311, the second passage 112, and the third passage 113 linearly, an increase in the manufacturing costs of the control valve 100 can be suppressed.

The embodiments of the present invention described above are merely illustration of some application examples of the present invention and not of the nature to limit the technical scope of the present invention to the specific constructions of the above embodiments.

## Claims

1. A control valve (100) comprising:
a valve housing (1);
a plurality of spools (2) assembled into the valve housing (1);
a plurality of pilot chambers (3) corresponding to the plurality of the spools (2);
a plurality of selection valves (4) connected respectively to the plurality of the pilot chambers (3) via communication paths (104); and
a maximum pressure introduction passage (110), the plurality of the selection valves (4) being configured to select and introduce a maximum pressure among pressures of the plurality of the pilot chambers (3) into the maximum pressure introduction passage (110); wherein
the plurality of the pilot chambers (3) and the communication paths (104) are provided in a plurality of caps (101) attached to one side surface (1a) of the valve housing (1);
wherein the maximum pressure introduction passage (110) has:
afirst passage (111) provided in each of the plurality of the caps (101) on a side opposite from the valve housing (1) across at least one pilot chamber of the plurality of the pilot chambers (3) and connected to at least one respective selection valve of the plurality of the selection valves (4);
a second passage (112) provided in each of the plurality of the caps (101), extending from the first passage (111) towards the valve housing (1) and opened in the one side surface (1a) of the valve housing (1); and
a third passage (113) provided so as to allow the second passages (112) to communicate with each other in the valve housing (1).

2. The control valve (100) according to claim 1, wherein
each of the selection valves (4) is configured to open and introduce a pressure of a corresponding pilot chamber (3) into the maximum pressure introduction passage (110), when the pressure of the corresponding pilot chamber (3) is higher than a pressure of the maximum pressure introduction passage (110).

3. The control valve (100) according to claim 1, wherein
the plurality of the caps (101) has a first cap (101A) and a second cap (101B);
the first cap (101A) has a first protruding portion (124) protruding to a second cap (101B) side;
the second cap (101B) has a second protruding portion (134) protruding to a first cap (101A) side;
the second passage (112) is provided in the first protruding portion (124) and the second protruding portion (134), respectively;
the first protruding portion (124) and the second protruding portion (134) are disposed so as to be faced with each other; and
the third passage (113) is connected to the second passages (112) in a region in which the first protruding portion (124) and the second protruding portion (134) are faced with each other.

4. The control valve (100) according to claim 3, wherein
a plurality of pilot chambers (3) is provided in the second cap (101B);
a pilot chamber (3) is provided in the first cap (101A);
and an interval between the pilot chamber (3) provided in the first cap (101A) and the pilot chamber (3) provided in the second cap (101B) adjacent to the pilot chamber (3) of the first cap (101A) is larger than an interval between each of the plurality of the pilot chambers (3) provided in the second cap (101B)

5. The control valve (100) according to claim 1, wherein
the first passages (111) extend linearly along a direction orthogonal to an axial direction of the spools (2);
the second passages (112) extend linearly along the axial direction of the spools (2); and
the third passage (113) has a passage (113y) extending linearly along a direction orthogonal to each of the first passages (111) and the second passages (112).

## Patentansprüche

1. Steuerventil (100), das umfasst:
ein Ventilgehäuse (1);
eine Vielzahl von Kolben (2), die in das Ventilgehäuse (1) eingebaut sind;
eine Vielzahl von Vorsteuerkammern (3), die der Vielzahl der Kolben (2) entsprechen;
eine Vielzahl von Wählventilen (4), die über Verbindungswege (104) jeweils mit der Vielzahl der Vorsteuerkammern (3) verbunden sind; sowie
einen Durchlass (110) für Einleitung von maximalem Druck, wobei die Vielzahl der Wählventile (4) zum Auswählen und Einleiten eines maximalen Drucks von den Drücken der Vielzahl der Vorsteuerkammern (3) in den Durchlass (110) für Einleitung von maximalem Druck ausgeführt sind; und
die Vielzahl der Vorsteuerkammern (3) sowie die Verbindungswege (104) in einer Vielzahl von Kappen (101) vorhanden sind, die an einer Seitenfläche (1a) des Ventilgehäuses (1) angebracht sind;
der Durchlass (110) für Einleitung von maximalem Druck aufweist:
einen ersten Durchlass (111), der in jeder der Vielzahl der Kappen (101) an einer Seite vorhanden ist, die dem Ventilgehäuse (1) über wenigstens eine Vorsteuerkammer der Vielzahl der Vorsteuerkammern (3) gegenüberliegt und mit wenigstens einem jeweiligen Wählventil der Vielzahl von Wählventilen (4) verbunden ist;
einen zweiten Durchlass (112), der in jeder der Vielzahl der Kappen (101) vorhanden ist, sich von dem ersten Durchlass (111) auf das Ventilgehäuse (1) zu erstreckt und sich in der einen Seitenfläche (1a) des Ventilgehäuses (1) öffnet; sowie
einen dritten Durchlass (113), der so eingerichtet ist, dass er zulässt, dass die zweiten Durchlasse (112) in dem Ventilgehäuse (1) miteinander in Verbindung stehen.

2. Steuerventil (100) nach Anspruch 1, wobei
jedes der Wählventile (4) so ausgeführt ist, dass es sich öffnet und einen Druck einer entsprechenden Vorsteuerkammer (3) in den Durchlass (110) für Einleitung von maximalem Druck einleitet, wenn der Druck der entsprechenden Vorsteuerkammer (3) höher ist als ein Druck des Durchlasses (110) für Einleitung von maximalem Druck.

3. Steuerventil (100) nach Anspruch 1, wobei
die Vielzahl der Kappen (101) eine erste Kappe (101A) sowie eine zweite Kappe (101B) aufweist;
die erste Kappe (101A) einen ersten vorstehenden Abschnitt (124) aufweist, der zu einer Seite der zweiten Kappe (101B) vorsteht;
die zweite Kappe (101B) einen zweiten vorstehenden Abschnitt (134) aufweist, der zu einer Seite der ersten Kappe (101A) vorsteht;
der zweite Durchlass (112) in dem ersten vorstehenden Abschnitt (124) bzw. dem zweiten vorstehenden Abschnitt (134) vorhanden ist;
der erste vorstehende Abschnitt (124) und der zweite vorstehende Abschnitt (134) so angeordnet sind, dass sie einander zugewandt sind; und
der dritte Durchlass (113) mit den zweiten Durchlassen (112) in einem Bereich verbunden ist, in dem der erste vorstehende Abschnitt (124) und der zweite vorstehende Abschnitt (134) einander zugewandt sind.

4. Steuerventil (100) nach Anspruch 3, wobei
in der zweiten Kappe (101B) eine Vielzahl von Vorsteuerkammern (3) vorhanden sind;
in der ersten Kappe (101A) eine Vorsteuerkammer (3) vorhanden ist; und
ein Zwischenraum zwischen der in der ersten Kappe (101A) vorhandenen Vorsteuerkammer (3) und der in der zweiten Kappe (101B) an die Vorsteuerkammer (3) der ersten Kappe (101A) angrenzend vorhandenen Vorsteuerkammer (3) größer ist als ein Zwischenraum zwischen jeder der in der zweiten Kappe (101B) vorhandenen Vielzahl von Vorsteuerkammern (3).

5. Steuerventil (100) nach Anspruch 1, wobei
sich die ersten Durchlasse (111) linear entlang einer Richtung orthogonal zu einer axialen Richtung der Kolben (2) erstrecken;
sich die zweiten Durchlasse (112) linear entlang der axialen Richtung der Kolben (2) erstrecken;
und der dritte Durchlass (113) einen Durchlass (113y) aufweist, der sich linear entlang einer Richtung orthogonal zu jedem der ersten Durchlasse (111) und der zweiten Durchlasse (112) erstreckt.

## Revendications

1. Vanne de commande (100) comprenant :
un boîtier de vanne (1) ;
une pluralité de tiroirs (2) assemblés dans le boîtier de vanne (1) ;
une pluralité de chambres de pilotage (3) correspondant à la pluralité de tiroirs (2) ;
une pluralité de vannes de sélection (4) connectées à la pluralité des chambres de pilotage (3) via des voies de communication (104) ; et
un passage d'introduction de pression maximale (110), la pluralité de vannes de sélection (4) étant configurée pour sélectionner et introduire une pression maximale parmi des pressions de la pluralité des chambres de pilotage (3) dans le passage d'introduction de pression maximale (110) ;
dans laquelle
la pluralité de chambres de pilotage (3) et les voies de communication (104) sont disposées dans une pluralité de bouchons (101) rattachés à une surface latérale (la) du boîtier de vanne (1) ;
dans laquelle le passage d'introduction de pression maximale (110) présente :
un premier passage (111) disposé dans chacun de la pluralité des bouchons (101) sur un côté opposé au boîtier de vanne (1) en travers d'au moins une chambre de pilotage de la pluralité des chambres de pilotage (3) et connecté à au moins une vanne de sélection respective de la pluralité des vannes de sélection (4) ;
un deuxième passage (112) disposé dans chacun de la pluralité des bouchons (101), s'étendant du premier passage (111) vers le boîtier de vanne (1) et ouvert dans l'une surface latérale (la) du boîtier de vanne (1) ; et
un troisième passage (113) disposé de sorte à permettre aux deuxièmes passages (112) de communiquer l'un avec l'autre dans le boîtier de vanne (1).

2. La vanne de commande (100) selon la revendication 1, dans laquelle
chacune des vannes de sélection (4) est configurée pour s'ouvrir et introduire une pression d'une chambre de pilotage correspondante (3) dans le passage d'introduction de pression maximale (110), lorsque la pression de la chambre de pilotage correspondante (3) est supérieure à une pression du passage d'introduction de pression maximale (110).

3. La vanne de commande (100) selon la revendication 1, dans laquelle
la pluralité des bouchons (101) présente un premier bouchon (101A) et un deuxième bouchon (101B) ;
le premier bouchon (101A) présente une première partie débordante (124) débordant sur un côté de deuxième bouchon (101B) ;
le deuxième bouchon (101B) présente une deuxième partie débordante (134) débordant sur un côté de premier bouchon (101A) ;
le deuxième passage (112) est disposé dans la première partie débordante (124) et la deuxième partie débordante (134), respectivement ;
la première partie débordante (124) et la deuxième partie débordante (134) sont disposées de sorte à se trouver l'une en face de l'autre ; et
le troisième passage (113) est connecté aux deuxièmes passages (112) dans une zone dans laquelle la première partie débordante (124) et la deuxième partie débordante (134) se trouvent l'une en face de l'autre.

4. La vanne de commande (100) selon la revendication 3, dans laquelle
une pluralité de chambres de pilotage (3) est disposée dans le deuxième bouchon (101B) ;
une chambre de pilotage (3) est disposée dans le premier bouchon (101A) ; et
un intervalle entre la chambre de pilotage (3) disposée dans le premier bouchon (101A) et la chambre de pilotage (3) disposée dans le deuxième bouchon (101B) adjacente à la chambre de pilotage (3) du premier bouchon (101A) est supérieur à un intervalle entre chacune de la pluralité des chambres de pilotage (3) disposée dans le deuxième bouchon (101B).

5. La vanne de commande (100) selon la revendication 1, dans laquelle
les premiers passages (111) s'étendent linéairement le long d'une direction orthogonale à une direction axiale des tiroirs (2) ;
les deuxièmes passages (112) s'étendent linéairement le long de la direction axiale des tiroirs (2) ; et
le troisième passage (113) présente un passage (113y) s'étendant linéairement le long d'une direction orthogonale à chacun des premiers passages (111) et des deuxièmes passages (112).
